# EUROPÄISCHE PATENTANMELDUNG

(11) **EP 0 748 835 A1**
(43) Veröffentlichungstag der Anmeldung: **18.12.1996**
(21) Anmeldenummer: 96108993.5
(22) Anmeldetag: 05.06.1996
(51) Int. Cl.: C08J 7/06, B05D 7/04, A01G 9/14

(54) **Verwendung einer wasserspreitenden Beschichtung mit Hohlkammerplatten aus Kunststoff**

(30) Priorität: 17.06.1995 DE 19522058
(71) Anmelder: Degussa Aktiengesellschaft, 60311 Frankfurt (DE)
(72) Erfinder: Dorn, Klaus, Dr., 63457 Hanau (DE); Hasskerl, Thomas, Dr., 61476 Kronberg (DE); Arnemann, Clemens, 63457 Hanau (DE)

(57) **Zusammenfassung**

Verwendung einer in einem einstufigen Verfahren ohne Anwendung eines organischen Lösemittels aufzubringenden wasserspreitenden von organischen Lösungsmitteln freien Beschichtung aus einer wäßrigen Dispersion eines anionischen Kieselsols und eines nichtionischen Tensids zur Beschichtung von zu Überdachungs- oder Verglasungszwecken eingesetzten Kunststoffhohlkammerplatten auf den Außenseiten. Überraschenderweise sind derartige Beschichtungen sowohl hinsichtlich der wasserspreitenden Wirksamkeit dauerhaft als auch besonders mechanisch stabil gegen Scheuerbeanspruchung.

## Beschreibung

Die Erfindung bezieht sich auf die Verwendung einer wasserspreitenden Beschichtung mit Hohlkammerplatten aus Kunststoff. Insbesondere betrifft die Erfindung die Verwendung einer "einstufigen" wasserspreitenden Beschichtungslösung, welche wenigstens ein anorganisches Kolloidsol in Kombination mit Wenigstens einem oberflächenaktiven Mittel aufweist, zur Beschichtung von Hohlkammerplatten aus Kunststoff, bevorzugt aus Polycarbonat, Polymethylmethacrylat oder Kunststoffen, die auf diesen Materialien basieren, auf eine solche Weise, daß die Beschichtung mit der Kunststoffhohlkammerplatte ohne Einsatz eines zusätzlichen Primers oder Haftvermittlers eine gegen mechanische Beanspruchung wie Scheuern und dergleichen relativ stabile Einheit bildet.

Hohlkammerplatten aus Kunststoffen wie Polymethylmethacrylat, Polycarbonat oder ähnlichen Kunststoffmaterialien werden zur Verglasung von Gewächshäusern und Feuchträumen eingesetzt. Aufgrund der hohen Luftfeuchtigkeit in diesen Räumen kondensiert Wasserdampf insbesondere bei niedrigen Außentemperaturen an den Innenwänden. Die Innenseite der Kunststoffverglasung wird dabei von vielen Tröpfchen bedeckt. Ein Teil des einfallenden Lichts wird durch die Vielzahl der Tropfen nach außen reflektiert und geht für die Photosynthese der Pflanzen verloren. Ein weiterer unerwünschter Effekt ist das Herabfallen der Tropfen wodurch Pflanzen und Möbel geschädigt werden können. Bei starkem Lichteinfall tritt an Pflanzen ein Brennglaseffekt auf, wodurch diese geschädigt werden.

Es sind schon zahlreiche Versuche unternommen worden, die Oberfläche der Verglasungsmaterialien aus Kunststoff hydrophil zu beschichten, damit Kondenswasser ablaufen kann. Um die Kunststoffoberfläche zu hydrophilieren, sind dabei hydrophile quellbare Bindemittel oder anorganische Kolloidsole in Kombination mit haftvermittelnden Bindemitteln eingesetzt worden.

Bei der Entwicklung einer wasserspreitenden Beschichtung für Kunststoffe ergibt sich die Schwierigkeit, daß hydrophile Bindemittel zwar ausreichend Wasser spreiten, aber mechanisch instabil sind. Anorganische Kolloidsole haften nicht ausreichend auf Kunststoffen und wurden deshalb mit haftvermittelnden Bindemitteln kombiniert. Um eine ausreichende Haftung der Beschichtung auf dem Kunststoff zu gewährleisten wurden zu deren Aufbringung auf die Kunststoffoberfläche organische Lösemittel eingesetzt.

Wenn auf organische Lösemittel verzichtet wird und das Bindemittel als wäßrige Polymerdispersion eingesetzt wird bleibt die Beschichtung mechanisch instabil. Durch Erhöhung des Bindemittelanteils kann zwar die mechanische Stabilität verbessert werden, aber die wasserspreitende Wirkung der Beschichtung geht dabei verloren.

Zum näheren Stand der Technik werden
- D1: = EP-0 149 182,
- D2: = EP-0 378 855,
- D3: = EP-0 374 516,
- D4: = JP- ShO 51-6193,
- D5: = JP- ShO 51-81877,
- D6: = DE-31 29 262,
- D7: = EP-0 530 617,
- D8: = US 4,994,318,
- D9: = DE 38 14 456,
- D10: = Derwent-Referat 95-128466/17 (JP 07 053747-A),
- D11: = Derwent-Referat 91-107085/15 (JP 03 050288-A),
- D12: = Derwent-Referat 86-024362/04 (JP 60 245685-A),
- D13: = Derwent-Referat 85-167917/28 (JP 60 096682-A) und
- D14: = Derwent-Referat 83-31167K/13 (JP 58 029832-A)
genannt.

Die D1 offenbart ein wasserspreitendes Kunststoffmaterial, enthaltend einen Grundkörper aus Kunststoff mit wasserabstoßender Oberfläche, wobei der Grundkörper auf wenigstens einem Teil seiner Oberfläche eine wasserspreitende Beschichtung aufweist. Diese besteht aus einer auf die Oberfläche des Kunststoffs aufgebrachten haftvermittelnden Schicht aus einem in Wasser nicht löslichen und im wesentlichen nicht quellbaren, in organischen Lösungsmittel löslichen organischen Polymermaterial mit einem Gehalt an polaren Gruppen und einer auf die haftvermittelnde Schicht aufgebrachten wasserspreitenden Schicht aus einem anorganischen Kolloidsol. Dabei kennzeichnet sich die wasserspreitende Schicht dadurch, daß sie aus Teilchen kolloidaler Größe von Siliciumdioxid und / oder einem nicht wasserlöslichen Metalloxid oder einem anionisch modifiziertem Siliciumdioxid oder Metalloxid aufgebaut ist und keine Bindemittel enthält.

In der D1 wird auch ein Verfahren beschrieben, nach welchem eine dauerhafte wirkungsvolle Beschichtung in einem zweistufigen Verfahren hergestellt werden kann. Im ersten Schritt dieses Verfahrens wird eine haftvermittelnde Schicht aus einem in organischen Lösemitteln gelösten polymeren Bindemittel auf das Kunststoffsubstrat aufgetragen und getrocknet. Nach dem Trocknen wird auf die haftvermittelnde Schicht eine Dispersion eines Kieselsols aufgetragen und bei erhöhter Temperatur getrocknet. Dieses Verfahren führt zu einer wirksamen Beschichtung, hat jedoch den Nachteil, daß es in zwei Stufen erfolgt und daß organische Lösemittel für die haftvermittelnde Schicht benötigt werden. Obwohl die D1 für die "2-stufige" wasserspreitende Beschichtung im Zusammenhang mit "Kunststoffgrundkörpern" allgemein die Beschichtung aller Oberflächen als möglich beschreibt, gibt S. 8, Z. 14 - 15 die eindeutige und verbindliche Anweisung, daß bei Verwendung der Kunststoffgrundkörper, vorzugsweise in Form von extrudierten Hohlkammerplatten, als Verglasungs- oder Bedachungsmaterial, die beschichtete Seite innen liegt.

Der D2 ist für den Fachmann ein im wesentlichen thermoplastisches und transparentes Substrat entnehmbar, welches verbesserte Wasserbenetzungs- und wasserspreitende Eigenschaften aufweist, welche durch Behandlung des thermoplastischen Substrats mit einem Lösungsmittelgemisch erhältlich ist. Zu den gemäß D2 einsetzbaren Lösungsmischungen gehören:
(A) eine Beschichtungsmischung eines organischen Lösungsmittels mit 1 % bis 10 % Feststoffanteil, der im wesentlichen 3 bis 50 Gewichtsteile Acrylharz pro 100 Teile eines kolloidalen anorganischen Oxids umfaßt, wobei das Oxid eine durchschnittliche Partikelgröße zwischen 4 und 60 nm hat; und
(B) eine Beschichtungszusammensetzung enthaltend 0,1 bis 2 Gewichtsteile eines kolloidalen anorganischen Oxids pro 100 Teile eines organischen Lösungsmittels.

Es wird also in der D2 ein einstufiges Verfahren beschrieben, bei dem das haftvermittelnde Bindemittel und das wasserspreitende anorganische Kolloid in einem einzigen Schritt in Form einer Dispersion des anorganischen Kolloids in organischen Lösemitteln aufgetragen werden. Bei diesem Verfahren arbeitet man zwar einstufig; es wird aber nach wie vor eine Mischung von organischen Lösemitteln benötigt, um eine ausreichende Haftfestigkeit der Beschichtung zu erhalten. Da mit einer hohen Verdünnung gearbeitet wird, ist die Menge an freigesetztem organischem Lösemittel beträchtlich. In einer Variante kann das Bindemittel auch entfallen, wobei durch die organischen Lösemittel die Substratoberfläche angequollen und das anorganische Kolloid in der Substratoberfläche verankert wird.

In der D3 findet man die Beschreibung eines Substrats und eines Verfahrens ähnlich der D2, wobei jedoch ein strahlenhärtbares Bindemittel eingesetzt wird

Aus der D4 ist ein Antitrübungsmittel bekannt, daß als Komponente A eine Dispersion mit kolloidaler Kieselsäure und kolloidalem Aluminiumoxid mit mittlerer Teilchengröße unter 50 µm, und als Komponente B eine Emulsion von Polymeren mit mittlerer Teilchengröße unter 0,5 µm verwendet. Die Komponenten A und B werden nach der D4 so gemischt, daß sich bezogen auf die Feststoffe für das Mengenverhältnis A : B ein Wert zwischen 85 : 15 und 99 : 1 ergibt und eine kolloidale Lösung vorliegt.

In der D4 wird demnach ein einstufiges Verfahren beschrieben, bei dem eine funktionsfähige wasserspreitende Beschichtung ohne die Verwendung organischer Lösemittel erhalten werden kann. Gemäß der D4 wird dies durch Beschichten des Kunststoffsubstrats mit einer Dispersion eines anorganischen Kolloids und eines Acrylatbindemittels erreicht. Diese Beschichtung ist jedoch mechanisch instabil und muß deshalb von Zeit zu Zeit erneuert werden.

Die D5 beinhaltet die Beschreibung einer Methode zur Herstellung von hydrophilen Kunststoffprodukten durch Behandlung von Kunststoffoberflächen mit einer wäßrigen Lösung von kolloidalem Aluminiumoxid, nichtionogenen oberflächenaktiven Stoffen und Acrylsäurepolymeren oder -copolymeren.

Die D6 behandelt die Verwendung einer wäßrigen Dispersion aus einem Acrylharz, nichtionischen und/oder anionischen Tensiden, einem Entschäumungsmittel und ggf. einem oder mehreren Alkoholen zur flächigen und langwirksamen Beschichtung von Kunststoffen mit antistatischer und beschlagsverhindernder Wirkung.

Schließlich bezieht sich die D7 auf ein Verfahren zur kontinuierlichen Innenbeschichtung eines steifen, extrudierten Hohlprofils aus thermoplastischem Kunststoff. Es wird ein Verfahren zur Beschichtung der Innenseiten von Kunststoffhohlkammerplatten aus Polycarbonat oder Polymethylmethacrylat beschrieben. Als Beschichtungsmittel wird im Ausführungsbeispiel eine netzmittelhaltige 5 prozentige wäßrige Lösung eines Kieselsols angeführt. Nach Beschichten der Kammern und Trocknen durch Einblasen von Warmluft erhält man einen 100 - 300 nm dicken Überzugsfilm. Über die mechanische Stabilität der Beschichtung wird keine Aussage gemacht.

Vielmehr wird in der D7 u.a. auf Beschichtungsmittel aus der D1 Bezug genommen. Aus dieser Patentschrift (D1) wiederum ist bekannt, daß Siliciumdioxid und andere Metalloxide eine große Härte und gute Benetzbarkeit durch Wasser besitzen. Es wird aber auch offenbart, daß sie keinerlei Haftung auf der Kunststoffoberfläche haben. Darüber hinaus ist die vorgestellte Fertigungsweise relativ umständlich, da eine Innenbeschichtung der Hohlkammerplatten mit hohem Aufwand verbunden ist, wie es gerade die D7 zeigt.

Die D8 offenbart die Verbesserung des Wasserspreitvermögens von thermoplastischen Substraten durch Lösungsmittelimprägnierung oder Behandlung mit Beschichtungsmischungen, die kolloidales Silica und ggf. Acrylharze aufweisen. Dabei zeigt die D8 zwar Hohlkammerplatten mit Beschichtung an der Außenseite, es werden jedoch organische Lösemittel zur Aufbringung der Beschichtung benötigt. So zeigen alle Beispiele den Einsatz von Diacetonalkohol in der Beschichtungsmischung. Darüber hinaus lehrt die D8 zwar auch den Einsatz anderer Hilfsstoffe zur Aufbringung der wasserspreitenden Beschichtung, wie etwa Silankupplungsmittel, Zirkonium-Aluminium-Metall-organische Komplexe, nichtionische Tenside oder Netzmittel, insbesondere die beiden letzteren dienen jedoch ausschließlich der Benetzung des zu beschichtenden Substrats während des eigentlichen Beschichtungsprozesses und nicht zur Funktionsverbesserung der wasserspreitenden Beschichtung, insbesondere der Kieselsäure. Weiterhin zeigen die Beispiele, daß der Einsatz eines Methacrylatharzes in der Beschichtungslösung eigentlich essentiell ist, was auch die Ansprüche der D8 untermauern.

Daneben gab es auch schon Versuche, vgl. z. B. D9, nichtionische Tenside mit HLB-Werten von 2 bis weniger als 13, insbesondere weniger als 12, zur Verhinderung des Beschlagens von Kunststoffoberflächen zu verwenden. Entsprechende Mittel enthielten 1 - 10 Gew.-Teile von bei Umgebungstemperatur flüssigen, nichtionischen Tensiden mit HLB-Werten von 2 bis weniger als 13, 50 - 90 Gew.-Teile von mit Wasser mischbaren Lösemitteln für die nichtionischen Tenside, wie Ethanol oder n-Propanol, sowie ggf. 5 bis 20 Gew.-Teile Wasser. Allerdings hat es sich herausgestellt, daß die damit erzielbare belagverhindernde Wirkung nicht dauerhaft ist, da sie zwar in gewissem Maße abwaschresistent aber nicht scheuerfest ist.

In D10 werden langlebige Filme oder Beschichtungen mit Mischungen aus Aluminiumoxid und Kieselsäure genannt. Nachteilig hierbei ist der Einsatz von Al₂O₃. Es ist daher eine möglichst Aluminiumoxid-freie Beschichtungszusammensetzung anzustreben.

Gemäß D11 wird eine Beschichtung aus einer Mischung von Aluminiumoxid und Kieselsäure in Kombination mit einem Aluminiumsalz offenbart. Die Solpartikel sind bis zu 100 Mikron groß. So große Partikel sind allerdings nicht mehr transparent.

D12 beschäftigt sich ebenfalls mit Mischungen aus Kieselsol und Aluminiumoxid, ebenso wie D13.

D14 schließlich betrifft Beschichtungszusammensetzungen für PE, PVC oder Polyester, die kolloides Silica und kationische und/oder amphotere Tenside aufweisen.

Angesichts der hierin zitierten Dokumente aus dem Stand der Technik lag der Erfindung die Aufgabe zugrunde eine ebenso wirksame wie dauerhafte Beschichtung von Kunststoffhohlkanmerplatten in nur einem Verfahrensschritt auf möglichst unkomplizierte Weise zu ermöglichen und dabei auf organische Lösungsmittel überhaupt oder zumindest weitgehend zu verzichten.

Gelöst werden diese und weitere nicht im einzelnen angegebene Aufgaben durch die Verwendung einer in einem einstufigen Verfahren ohne Anwendung eines organischen Lösemittels aufzubringenden wasserspreitenden von organischen Lösungsmitteln freien Beschichtung aus einer wäßrigen Dispersion eines anionischen Kieselsols und eines nichtionischen Tensids zur Beschichtung von zu Überdachungs- oder Verglasungszwecken eingesetzten Kunststoffhohlkammerplatten auf den Außenseiten.

Bevorzugte Ausführungsformen der Erfindung werden in den von Anspruch 1 abhängigen Unteransprüchen unter Schutz gestellt.

Wenn die an sich bekannte Beschichtung auf erfindungsgemäße Weise mit Hohlkammerplatten verwendet wird, resultieren aus dieser Verwendung auf der Außenseite beschichtete Hohlkammerplatten, die
1. Wasser ausreichend spreiten;
2. bei denen die Beschichtung ohne zusätzlichen Primer oder Haftvermittler fest mit dem Substrat in Form der Kunststoffhohlkammerplatte verbunden ist;
3. bei denen die Beschichtung selbst mechanisch außerordentlich stabil ist, insbesondere gegen Abrieb durch Scheuern und dergleichen; und
4. in einem einfachen Beschichtungsverfahren herstellbar sind;
5. wobei die Beschichtung aus einer Dispersion unter vollständigem Verzicht auf organische Lösungsmittel fest und dauerhaft in einem einstufigen Verfahren auf die Substrate aufbringbar ist.

Ausgehend vom bekannten Stand der Technik war es dabei vor allem in keinster Weise zu erwarten, eine scheuerbeständige gut haftende wasserspreitende Beschichtung durch Verwendung netzmittelhaltiger wäßriger Lösungen eines Kieselsols als Beschichtungsmittel zu erhalten. Die Verwendung netzmittelhaltiger 5 prozentiger wäßriger Lösungen eines Kieselsols zur Innenbeschichtung von Kunststoffhohlkammerprofilen wird in der D7 zwar bereits offenbart, es war jedoch gemäß der D7 z. B. in Verbindung mit der Lehre der D1 essentiell nötig solche Beschichtungen auf der Innenseite der Hohlkammerplatten anzubringen. In einem solchen Fall kann die mechanische Stabilität der Beschichtung von untergeordneter Bedeutung sein, da die Beschichtung in den Kammern der Kunststoffhohlkammerplatten, also an einer Stelle, die nicht mechanisch beansprucht wird, aufgetragen wird.

Hierbei ist es vor allem auch bemerkenswert, daß die Kombination einer guten wasserspreitenden Eigenschaft mit einer guten Scheuerbeständigkeit durch eine Kombination der Bestandteile der Beschichtungszusammensetzung erzielt wird. Weder Tensid allein noch anorganisches Kieselsol für sich allein vermögen die Wirkung hervorzurufen, wie sie die Beschichtung gemäß der Erfindung aufweist.

Ausgehend von dem in D1 und in den anderen genannten Dokumenten offenbarten Stand der Technik war daher nicht zu erwarten, daß eine Beschichtung aus Kieselsolen und Netzmittel ohne zusätzliche Bindemittel und/oder ohne haftvermittelnde Primerschicht mechanisch stabil wird. Um so überraschender war es, daß eine erfindungsgemäß auf der Außenseite einer Kunststoffhohlkammerplatte aufgetragene Beschichtung aus Kieselsol und Netzmittel, obwohl sie keine Bindemittel enthält, den Naßscheuertest nach DIN 53778 über 20000 Hübe besteht, ohne ihre Wirksamkeit zu verlieren.

Es wurde weiter gefunden, daß beim Auftragen der wäßrigen Lösung eines anorganischen Kolloidsols in Form von anionischem Kieselsol und eines nichtionischen Tensids auf die Außenseiten von Kunststoffhohlkammerplatten und anschließendem Erhitzen der beschichteten Platten auf erhöhte Temperaturen mechanisch stabile und dauerhaft wirksame Beschichtungen erhalten werden.

Im Rahmen der Erfindung werden unter Kunststoffhohlkammerplatten die dem Fachmann bekannten durch Extrusion oder Coextrusion aus thermoplastischen Kunststoffen herstellbaren flächigen Gebilde verstanden, in denen sich Kammern verschiedener Geometrie und Anordnung befinden können, wobei die Kammern Luft enthalten können, ein Gas oder auch evakuiert sind. Die Geometrie der Platten selbst ist ebenso wie die Zahl, Anordnung und Geometrie der Kammern für die Erfindung nicht von belang. Von Bedeutung ist nur, daß die Kunststoffhohlkammerplatten durch die Ausbildung von Kammern im Inneren eine diesen Kammern abgewandte Außenseite definieren, während die den Kammern zugewandte Seite als Innenseite bezeichnet wird.

Zu den erfolgreich im erfindungsgemäßen Sinne beschichtbaren Kunststoffhohlkammerplatten gehören z. B. Stegdoppelplatten, Stegmehrfachplatten, jeweils mit geraden oder schrägen Stegen, Fachwerkplatten, etc. Die Platten können auch mehr als zwei Gurte aufweisen, wobei die Außenseite in diesem Fall regelmäßig durch die außenliegenden Gurte gebildet wird. Ein oder mehrere Mittelgurte werden nicht zur Außenseite gerechnet.

Die Materialien für die Platten, mit welchen die Beschichtung im Rahmen der Erfindung verwendbar ist, unterliegen keiner besonderen Einschränkung. Alle an sich zur Herstellung von Kunststoffhohlkammerplatten dem Fachmann geläufigen Werkstoffe sind erfindungsgemäß zu beschichten. Bevorzugt werden im Sinne der erfindungsgemäßen Verwendung Kunststoffhohlkammerplatten aus Polymethylmethacrylat oder Polycarbonat beschichtet.

Voraussetzung für die ausreichende mechanische Stabilität der Beschichtung ist, daß die Dicke der Beschichtung unter 500 nm liegt. Vorteilhaft ist eine Schichtdicke unter 300 nm und besonders vorteilhaft liegt eine Schichtdicke zwischen 100 und 200 nm. Die Untergrenze für die Schichtdicke beträgt ca. 50 nm. Mit zunehmender Schichtdicke kann die Beschichtung opak werden, wobei auch die mechanische Festigkeit der Schicht schlechter wird.

Die gemäß der Erfindung verwendbare Beschichtung liegt bei der Verwendung mit den Kunststoffhohlkammerplatten zunächst in flüssiger Form, beispielsweise als Lösung vor. Die flüssige Form der Beschichtung wird im folgenden jeweils als Beschichtungslösung bezeichnet.

Eine Beschichtungslösung zur erfindungsgemäßen Verwendung der Erfindung weist eine wäßrige Dispersion wenigstens eines anionischen Kieselsols und wenigstens eines nichtionischen Tensids auf.

In der erfindungsgemäßen Beschichtungslösung einsetzbare Kolloidsole sind z. B. aus der D1 bekannt. Anionische Kieselsole sind essentiell. Kieselsole sind wäßrige, anionische Lösungen von kolloidalem, amorphen SiO₂, die üblicherweise 30%ig, maximal 60%ig im Handel sind. Der durchschnittliche Partikeldurchmesser beträgt ca. 5 - 150 nm. Unter den anionisch modifizierten Kieselsolen sind die unter den Handelsnamen Ludox®, Levasil® oder Nalcoag® kommerziell erhältlichen Typen bevorzugt. Es handelt sich dabei bevorzugt um Kieselsoltypen mit einer mittleren Partikelgröße zwischen ca. 5 bis 30 nm, besonders bevorzugt sind Typen mit ca. 10 bis 20 um mittlerer Partikelgröße.

Die anionisch modifizierten Lösungen werden zur Herstellung der Beschichtungslösung vorzugsweise mit einem pH-Wert im Bereich von ca. 8 bis 11, günstigenfalls zwischen 9 und 10,5 eingesetzt. Als Gegenion für die im Rahmen der Erfindung nützlichen Kieselsole ist Natrium bei weitem am häufigsten. Möglich sind jedoch auch andere Gegenionen wie Ammonium oder andere Alkalimetalle. Ferner ist eine Oberflächenmodifizierung der Kieselsäurepartikel mit Aluminat möglich.

Zu den Tensiden, von denen wenigstens eines für die Beschichtungslösung der Erfindung essentiell ist, gehören alle dem Fachmann geläufigen nichtionischen Tenside. Hierzu gehören u. a. Fettalkoholpolyglykolether, Alkylphenolpolyglykolether, Propylenglykol-Ethylenoxidadditionsprodukte, Fettalkohol-Alkylenoxidadditionsprodukte, Alkylpolyethylenglykolether, Blockpolymerisate aus Propylenoxid und Ethylenoxid und viele mehr.

Bevorzugte Verbindungen sind Alkylphenolpolyglykolether und Fettalkoholpolyglykolether.

In einer bevorzugten Ausführungsform der Erfindung werden in der erfindungsgemäß zu verwendenden wässrigen Beschichtungsdispersion ein oder mehrere Tensid(e) mit einem HLB-Wert im Bereich von zwischen 12 und 20 eingesetzt.

Besonders zweckmäßig liegt der HLB-Wert der eingesetzten Tenside im Bereich von 13 bis 20, ganz besonders günstig sind HLB-Werte von > 13 bis 20. Die handelsüblichen Alkylphenolpolyglykolether sowie Fettalkoholpolyglykolether erfüllen diese Anforderungen.

Dabei werden unter "HLB-Werten" im Sinne der Erfindung die nach Griffin ermittelten HLB-Zahlen verstanden, vgl. N. Schönfeldt, "Grenzflächenaktive Ethylenoxid-Addukte", Wissenschaftliche Verlagsgesellschaft mbH Stuttgart 1976, S. 209 - 218.

Dabei hat es sich im Rahmen der Erfindung erstaunlicherweise gezeigt, daß Tenside mit größeren HLB-Werten solchen mit kleinen HLB-Werten überlegen sind. Insbesondere benetzen Beschichtungslösungen, die Tenside mit kleineren HLB-Werten (< 12 oder < 13), das Substrat ungenügend.

Die Beschichtungslösung gemäß der Erfindung kann in untergeordneten Mengen auch weitere Bestandteile enthalten. So sind beispielsweise Zusätze anionischer Tenside in geringen Mengen bis ca. 0,2 Gew.-% möglich.

Die Menge der in der erfindungsgemäß verwendbaren Beschichtungslösung enthaltenen Ingredienzen kann über einen weiten Bereich differieren. Im allgemeinen wird die Zusammensetzung in Abhängigkeit von der Auftragstechnik so gewählt, daß nach dem Verdunsten des Wassers ein Film zurückbleibt. Mit den bekannten Auftragstechniken lassen sich Lösungsmengen zwischen 5 und 20 g/m² gut auf Kunststoffsubstraten auftragen.

In bevorzugter Ausführungsform weist die Beschichtungslösung entionisiertes Wasser mit ca. 2 - 4 % SiO₂ in Form eines anionischen Kieselsols und ca. 0,1 - 0,3 % eines nichtionischen (schaumarmen) Tensids auf.

Sie wird in dünner Schicht mit einer Naßfilmdicke von ca. 5 - 10 µm aufgetragen und bildet einen Trockenfilm von ca. 0,1 - 0,4 µm.

Eine erfindungsgemäß verwendete und dabei auf eine Kunststoffhohlkammerplatte aufgebrachte Beschichtung ist mechanisch stabil und übersteht den Naßscheuertest nach DIN 53778 mit 20000 Hüben. (1000 Hübe = 25 min Scheuern). Damit erfüllt sie alle an eine wasserspreitende Beschichtung gestellten Forderungen. Die Wirksamkeit der erfindungsgemäßen Beschichtungen ist gleichzeitig dauerhaft.

Da die Beschichtung lösemittelfrei ist, braucht man keine explosionsgeschützten Apparaturen; ferner ist sie dadurch auch umweltfreundlich.

Um die geforderten Eigenschaften der Beschichtung zu erreichen, muß die Schichtdicke sehr gleichmäßig sein. Eine möglichst glatte Oberfläche bietet die geringste Angriffsfläche gegen mechanische Beschädigung. Die erforderliche Gleichmäßigkeit der Schichtdicke läßt sich durch ein geeignetes Beschichtungsverfahren gewährleisten. Die z.B. in der DE 3400079 aufgezeigten Verfahren sind gut geeignet. Besonders vorteilhaft ist es, die Beschichtung direkt im Anschluß an die Extrusion der Kunststoffhohlkammerplatten durchzuführen. Beim Beschichten der noch warmen Platten verdampft das Wasser der in dünner Schicht aufgetragenen Flüssigkeit innerhalb einiger Sekunden und hinterläßt einen gleichmäßigen trockenen Film, der durch eine anschließende Wärmebehandlung innerhalb 5 min seine mechanische Festigkeit erreicht.

Nachfolgend wird die Erfindung an Hand von Ausführungsbeispielen weiter erläutert.

### 1. Beschichtungsflüssigkeit:

Man stellt eine wäßrige Dispersion mit einem SiO₂-Gehalt von 3 % aus einem anionischen Kieselsol, wie z.B. Ludox® HS 40, Ludox® SM, Ludox® AM (Hersteller: Du Pont), Levasil® 200 oder Levasil® 300 (Hersteller Bayer AG) her und gibt 0,1 - 0,3 % eines nichtionischen Tensids wie z.B. Nonylphenolpolyglykolether oder Fettalkoholpolyglykolether zu dieser Lösung. Es können auch Mischungen der verschiedenen Kieselsole bzw. Tenside eingesetzt werden.

### 2. Beschichten des Substrats:

Eine Hohlkammerplatte aus Polycarbonat (z. B. Decarglas®) wird durch Streichen mit einer in der Beschichtungsflüssigkeit getränkten Bürste gleichmäßig beschichtet. Man läßt den nassen Film bei 40 - 60°C trocknen und erhitzt die beschichtete Platte anschließend für 5 min auf 100°C im Trockenschrank.

### 3. Prüfung der beschichteten Platte:

Die Funktion der gehärteten Platte kann man in einem Miniaturgewächshaus, wie es in der DE-OS 34 00 079.8-43 beschrieben wird, überprüfen. Auf einer unbeschichteten Platte bilden sich dabei viele Tropfen, die in unregelmäßigen Abständen zusammenlaufen und von der Platte abfallen, während sich auf der beschichteten Platte ein Kondensatfilm bildet, der zum Rand der Platte abläuft, ohne daß Tropfen abfallen.

### 4. Naßscheuertest:

Eine beschichtete Platte wird in einem Naßscheuertest in Anlehnung an die DIN 53778 über 20000 Hübe gescheuert. Bei der Überprüfung der Scheuerbeständigkeit im Miniaturgewächshaus können nach 20000 Hüben Naßscheuerbeanspruchung keine Scheuerspuren entdeckt werden.

Weitere Vorteile und Ausführungsformen der Erfindung ergeben sich aus den nachfolgenden Patentansprüchen.

## Patentansprüche

1. Verwendung einer in einem einstufigen Verfahren ohne Anwendung eines organischen Lösemittels aufzubringenden wasserspreitenden von organischen Lösungsmitteln freien Beschichtung aus einer wäßrigen Dispersion eines anionischen Kolloidsols und eines nichtionischen Tensids zur Beschichtung von zu Überdachungs- oder Verglasungszwecken eingesetzten Kunststoffhohlkammerplatten auf den Außenseiten.

2. Verwendung nach Anspruch 1,
**dadurch gekennzeichnet,**
daß ein oder mehrere Tensid(e) mit einem HLB-Wert im Bereich von zwischen 12 und 20 eingesetzt werden.

3. Verwendung nach Anspruch 2 eines oder mehrerer Tensid(e) mit einem HLB-Wert im Bereich von 13 bis 20.

4. Verwendung nach einem oder mehreren der vorhergehenden Ansprüche,
**dadurch gekennzeichnet,**
daß Kunststoffhohlkammerplatten so beschichtet werden, daß die Dicke der Beschichtung weniger als 500 nm beträgt.

5. Verwendung nach Anspruch 4,
**dadurch gekennzeichnet,**
daß Kunststoffhohlkammerplatten so beschichtet werden, daß die Dicke der Beschichtung weniger als 300 nm beträgt.

6. Verwendung nach Anspruch 4 oder 5,
**dadurch gekennzeichnet,**
daß Kunststoffhohlkammerplatten so beschichtet werden, daß die Dicke der Beschichtung zwischen 100 und 200 nm beträgt.

7. Verwendung nach einem der vorhergehenden Ansprüche,
**dadurch gekennzeichnet,**
daß Hohlkammerplatten aus Polycarbonat oder Polymethylmethacrylat beschichtet werden.
